# EUROPÄISCHE PATENTANMELDUNG

(11) **EP 2 757 021 A2**
(43) Veröffentlichungstag der Anmeldung: **23.07.2014**
(21) Anmeldenummer: 14000201.5
(22) Anmeldetag: 21.01.2014
(51) Int. Cl.: B62B 3/14

(54) **Montagevorrichtung für einen Einkaufswagen**

(30) Priorität: 22.01.2013 DE 102013200985; 26.03.2013 DE 102013005274
(71) Anmelder: Andres GmbH, 95100 Selb (DE)
(72) Erfinder: Grünling, Klaus André, DE - 95100 Selb (DE)
(74) Vertreter: FDST Patentanwälte

(57) **Zusammenfassung**

Die Erfindung betrifft eine Montagevorrichtung (1) für einen Einkaufswagen (2) mit einem eine Griffstange (3) aufweisenden Wagengestell (4), mit einem an die Griffstange (6) montierbaren Tragkörper (5), der eine Auflagefläche (6) und eine gegen diese vorgespannte Halteklammer (7) zur Klemmbefestigung eines Informationsträgers (8) aufweist.

## Beschreibung

Die Erfindung betrifft eine Montagevorrichtung für einen Einkaufswagen mit einem eine Griffstange aufweisenden Wagengestell.

Derartige Einkaufswägen werden regelmäßig in Supermärkten oder dergleichen Warenhäusern bereitgestellt, um vom Kunden zum Erwerb vorgesehene Waren aufzunehmen und gesammelt an eine Warenkasse zu befördern. Ein solcher Einkaufswagen umfasst üblicherweise ein mit Rollen oder Rädern versehenes Wagengestell mit einer Griffstange zum Anschieben des Einkaufswagens und mit einem aus Gitterstäben gebildeten Warenkorb zur Aufnahme der Waren. Sowohl der Warenkorb als auch die Griffstange sind häufig mit Werbe- oder Informationsflächen versehen bzw. hierzu eingerichtet.

Der Erfindung liegt die Aufgabe zugrunde, einen Einkaufswagen der genannten Art um mindestens eine Funktionalität zu erweitern und hierzu eine geeignete Montagevorrichtung anzugeben.

Erfindungsgemäß ist für einen solchen Einkaufswagen eine Montagevorrichtung vorgesehen, die an der Griffstange des Wagengestells befestigt werden kann. Die Montagevorrichtung stellt eine Auflagefläche und eine gegen diese vorgespannte Halteklammer bereit, um einen Informationsträger, vorzugsweise einen Einkaufszettel oder dergleichen, in einfacher Art und Weise lösbar sowie für den Kunden sichtbar zu halten.

Die Montagevorrichtung weist einen Tragkörper auf, der einerseits die Auflagefläche mit gegen diese vorgespannter Halteklammer bereitstellt sowie andererseits in einfacher Art und Weise an der Griffstange des Einkaufswagens befestigt werden kann. Hierzu ist dem Tragkörper geeigneterweise ein Halteelement zur Befestigung an der Griffstange zugeordnet.

In besonders bevorzugter Ausführungsform ist der Tragkörper selbst oder ein Basiselement hiervon schalenförmig ausgeführt, wobei die Schalenform vorzugsweise im der Griffstange im Montagezustand zugewandten Bereich abgerundet und zweckmäßigerweise an die Griffstangenkontur angepasst ist. Hierdurch sind einerseits kantige Bereiche vermieden. Insbesondere jedoch erscheint aufgrund dieser abgerundeten Form die zweckdienliche Auflagefläche prägnant.

Zur Bereitstellung einer solchen zweckdienlichen und designerisch anmutenden Form sowie für eine weitere Funktion, nämlich der Bereitstellung einer Werbeoder Informationsfläche, ist der Tragkörper im Wesentlichen zweiteilig mit einem bodenseitig vorzugsweise abgerundeten Basiselement und einem daran gelenkig angebundenen Deckel ausgeführt. Der Deckel ist vorzugsweise transparent, um die von dem Basiselement bereitgestellte Werbe- bzw. Informationsfläche sichtbar zu belassen und dennoch abzudecken, so dass ein darauf aufgelegter Werbeträger sichtbar aber dennoch vor Beschädigung und/oder unerwünschter Entnahme geschützt ist. Der transparente Deckel ist hierzu mit dem Basiselement gelenkig und somit verschwenkbar verbunden sowie vorzugsweise mit diesem lösbar verrastet.

Das Gelenk des Tragkörpers zwischen dessen Basiselement und dessen Deckel dient zur Halterung der Halteklammer. Hierzu ist das scharnierartige Gelenk vorzugsweise mit mindestens einem Gelenkzapfen versehen, auf der die Halteklammer mit deren Federschenkeln aufsitzt. Der Gelenkzapfen ist geeigneterweise an den Deckel angeformt. Die Halteklammer kann auch an den deckelseitigen Gelenkzapfen oder an eine deckelseitige Gelenköse und/oder an den Deckel angeformt sein. Auch kann eine Gelenkstange vorgesehen sein, auf der die Halteklammer mit deren Federschenkeln aufsitzt.

Die Halteklammer ist in geeigneter Ausführungsform mit einem vorzugsweise U-förmigen Klammerabschnitt ausgeführt, der sich in die Auflagefläche hinein erstreckt, um den Informationsträger in Form vorzugsweise eines Einkaufszettels oder dergleichen auf der Auflagefläche zu halten. Bei einem U-förmigen Klammerabschnitt schließt sich an den oder jeden U-Schenkel der Halteklammer schenkelendseitig ein spiralfederartiger Federabschnitte an, dessen Federende am Tragkörper abgestützt ist, um die gewünschte Federvorspannung der Halteklammer bereitzustellen. Vorzugsweise sind bei dieser Ausführungsform beide U-Schenkel der Halteklammer schenkelendseitig als Spiralfeder ausgeführt, die im Montagezustand auf der Gelenkstange bzw. auf den Gelenkzapfen sitzen.

Der Tragkörper bzw. dessen Basiselement ist bodenseitig, d.h. an der der Griffstange des Einkaufswagens zugewandten Montageseite mit einer Rundnut oder Rundsicke versehen, deren Ausrundung an den Durchmesser der Griffstange angepasst ist. Im Montagezustand umgreift somit bereits der Tragkörper bzw. dessen Basiselement die Griffstange teilweise, so dass eine zuverlässige und insbesondere raumsparende Befestigung des Tragkörpers an der Griffstange ermöglicht ist. Die zur Montage bereitgestellten zusätzlichen Halteelemente sind geeigneterweise ebenfalls mit entsprechenden Ausrundungen oder Rundsicken versehen und werden geeigneterweise gegen den Tragkörper bzw. dessen Basiselement bodenseitig verschraubt.

Die mit der Erfindung erzielten Vorteile bestehen insbesondere darin, dass durch die erfindungsgemäße Montagevorrichtung einerseits eine Auflagefläche mit einer Halteklammer für einen Informationsträger, insbesondere einen Einkaufszettel oder dergleichen, bereitgestellt ist. Andererseits kann der Tragkörper aufgrund dessen Ausbildung mit einem, insbesondere schalenförmigen, Basiselement und mit einem transparenten Deckel als zusätzliche Werbefläche bzw. als zusätzlicher Werbeträger (Anschubwerbung) oder auch als Informationsträger bereitgestellt werden, beispielsweise um einen Lageplan des Supermarktes bzw. Warenhauses aufzunehmen und somit dem Kunden die Orientierung zum Auffinden der gewünschten Waren zu erleichtern.

Nachfolgend wird ein Ausführungsbeispiel der Erfindung anhand einer Zeichnung näher erläutert. Darin zeigen:
- Fig. 1: in Schmalseitenansicht eine Montagevorrichtung für einen Einkaufswagen, mit in eine Auflagefläche hineinragender Halteklammer,
- Fig. 2: die Montagevorrichtung gemäß Fig. 1 in Draufsicht,
- Fig. 3: eine Variante der Montagevorrichtung in perspektivischer Vorderansicht mit an Gelenkzapfes eines mit diesen einteiligen Deckels angeformter Halteklammer mit Blick auf eine Rasthalterung zwischen einem Basiselement und dem Deckel,
- Fig. 4: in perspektivischer Seitenansicht die Montagevorrichtung gemäß Fig. 1 mit gegenüber dem Basiselement in Offenstellung verschwenktem Deckel,
- Fig. 5: die Montagevorrichtung gemäß Fig. 1 in perspektivischer Rückseitenansicht mit Blick auf eine Gelenkverbindung mit daran gehaltener Halteklammer,
- Fig. 6: die Montagevorrichtung in einer Unteransicht mit bodenseitiger Rundnut und einem bodenseitig befestigbaren Halteelement zur Griffstangenmontage an einem Einkaufswagen, und
- Fig. 7: schematisch einen Einkaufswagen mit montierter Montagevorrichtung.

Einander entsprechende Teile sind in allen Figuren mit den gleichen Bezugszeichen versehen.

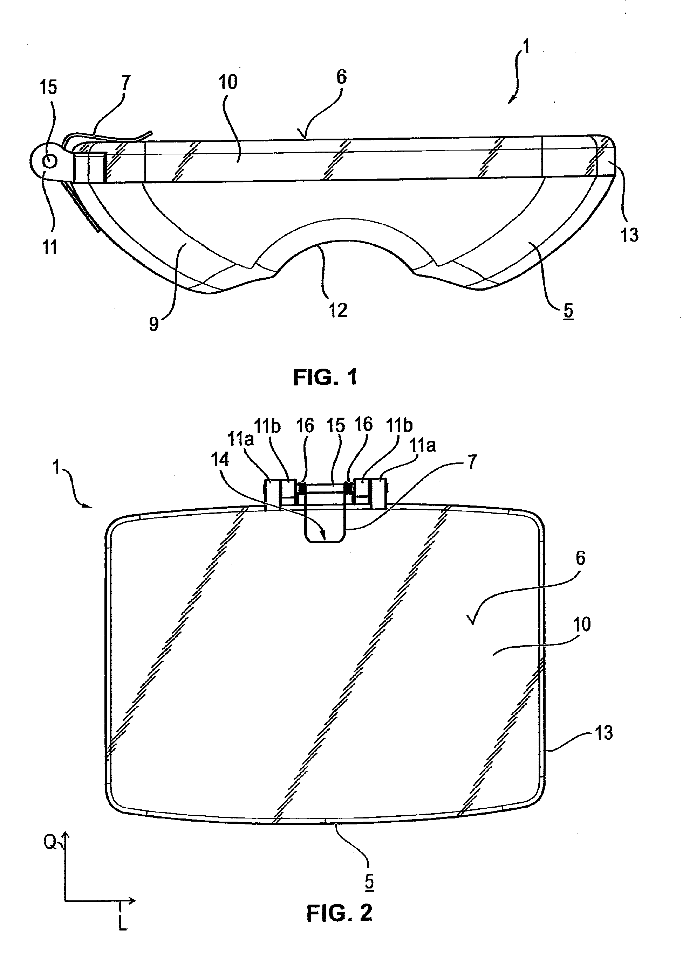

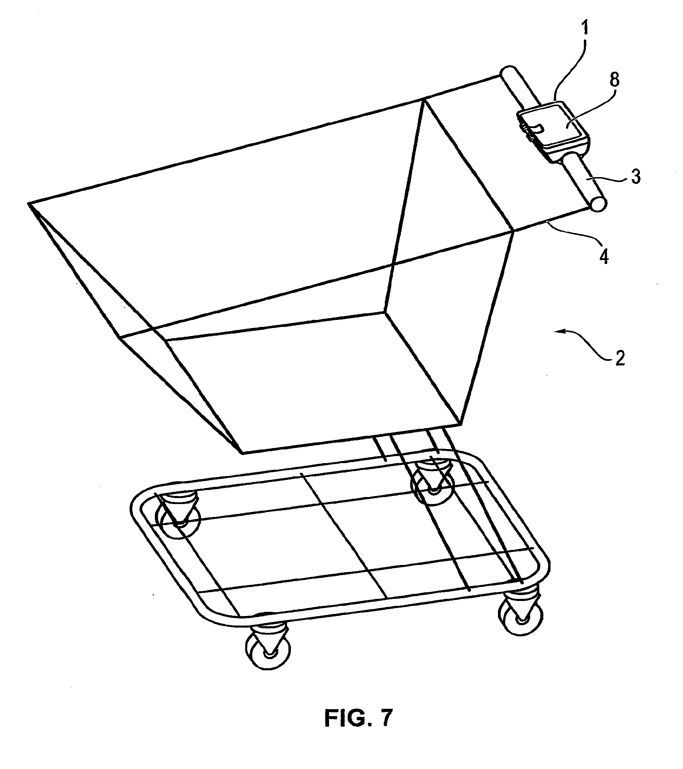

Fig. 1 zeigt in Verbindung mit Fig. 7 eine Montagevorrichtung 1 für einen Einkaufswagen 2 mit einem eine Griffstange 3 aufweisenden Wagengestell 4. Der Einkaufswagen 2 kann ein herkömmlicher Schubwagen mit einem Drahtkorb und vier selbst gelenkten Castor-Rädern zum Transport von Waren eines Kunden in einem Supermarkt oder dergleichen Warenhaus sein.

Die Montagevorrichtung 1 weist einen Tragkörper 5 mit einer Auflagefläche 6 und eine gegen diese vorgespannte Halteklammer 7 zur Klemmfixierung eines Informationsträgers 8, beispielsweise eines Einkaufszettels (Fig. 7), auf. Der Tragkörper 5 der Montagevorrichtung 1 ist aus einem Basiselement oder Grundkörper 9 sowie einem Deckel 10 gebildet, der an das Basiselement 9 über eine Gelenkverbindung 11 schwenkbeweglich angebunden ist. Bodenseitig weist der Tragkörper 5 bzw. das Basiselement 9 eine bogen- oder kreisbogenförmige, nach innen eingezogene Rundnut oder Rundsicke 12 auf. Der Radius der Rundnut 12 ist hierbei geeigneterweise an übliche Außendurchmesser der Griffstangen 3 derartiger Einkaufswägen 2 angepasst. Die Rundnut 12 erstreckt sich in Längsrichtung L des Tragkörpers 5 (Fig. 2).

Der Deckel 10 ist transparent ausgeführt und besteht, insbesondere ebenso wie das Basiselement 9, aus Kunststoff. Der transparente Deckel 10 weist randseitig einen zumindest annähernd vollständig umlaufenden Kragen 13 auf, der das Basiselement 9 oberseitig zumindest teilweise übergreift.

Wie aus Fig. 2 vergleichsweise deutlich ersichtlich ist, erstreckt sich die Halteklammer 7 teilweise in Querrichtung Q des Tragkörpers 5 in die Auflagefläche 6 hinein und bildet dort zusammen mit der unter Vorspannung stehenden Halteklammer 7 eine Fixierstelle 14 für den Informationsträger 8.

Das Gelenk bzw. die Gelenkstelle 11 ist durch Gelenkösen oder-zapfen 11 a, die an den Deckel 10 angeformt sind, und hiermit korrespondierende Gelenkzapfen oder -ösen 11 b gebildet, die an das Basiselement 9 angeformt sind. Im Falle einer Gelenkstange 15, die die Gelenkösen 11a, 11 b durchsetzt und die Schwenkachse des Deckels 11 bildet, dient diese Gelenkstange 15 zudem zur Aufnahme von Federabschnitten, insbesondere Spiralfederabschnitten 16 der geeigneterweise U-förmigen Halteklammer 7. Anstelle der Gelenkstange können auch Gelenkzapfen vorgesehen sein, die an die Gelenkösen 11 b des Basiselements 9 oder an die die Gelenkösen 11a des Deckels 10 angeformt sein können.

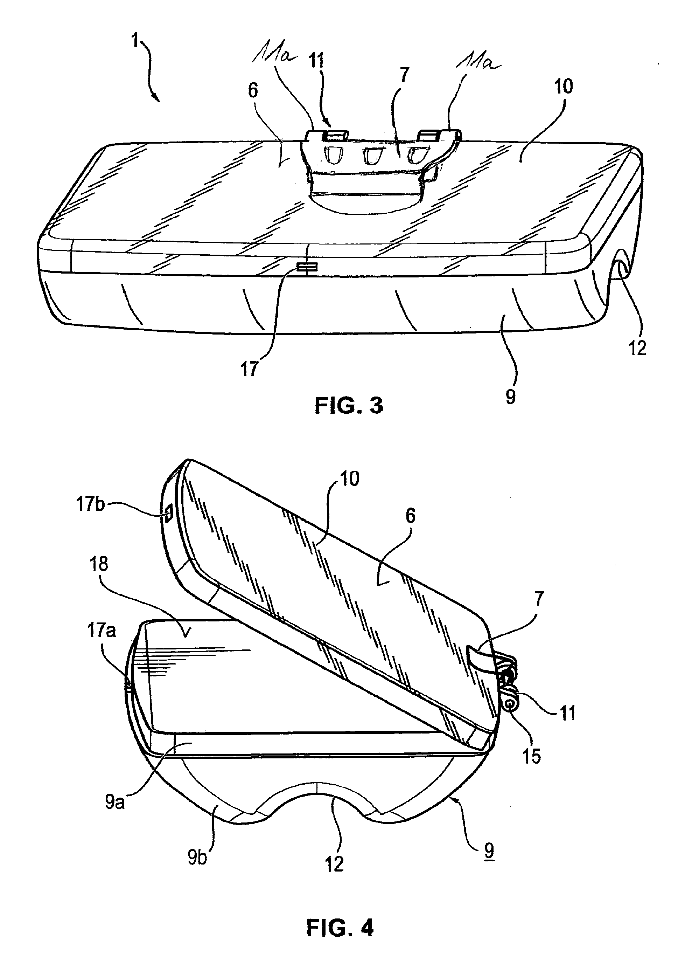

Bei der Ausführungsform gemäß Fig. 3 ist die Halteklammer 7 an die Gelenkösen bzw. -zapfen 11a des Deckels 10 und/oder an diesen angeformt. Wie aus Fig. 3 vergleichsweise deutlich ersichtlich ist, befindet sich an der dem Gelenk 11 und der Halteklammer 7 gegenüber liegenden Frontseite des Tragkörpers 5 eine Rastoder Schnappverbindung 17 zwischen dem Basiselement 9 und dem transparenten Deckel 10. Die Rast- bzw. Schnappverbindung 17 ist im Ausführungsbeispiel gebildet durch eine an das Basiselement (Basisteil) 9 angeformte Rastnase 17a und eine korrespondierende Rastöffnung 17b am Deckel 10, wie aus Fig. 4 vergleichsweise deutlich ersichtlich ist.

Fig. 4 zeigt die Montagevorrichtung 1 bei aufgeklapptem Deckel 10. Das Verschwenken des Deckels 10 erfolgt gegen die Federkraft der Halteklammer 7. Unterhalb des Deckels 10 ist vom Tragkörper 5 bzw. von dessen Basiselement 9 eine Werbe- oder Informationsfläche 18 gebildet. Diese kann genutzt werden für einen Werbeträger oder auch beispielsweise für einen Lageplan des Supermarktes oder eines anderen Warenhauses, in dem der Einkaufswagen 2 dem Kunden zur Verfügung gestellt ist.

Gemäß der Ausführungsform nach Fig. 4 besteht das Basiselement 9 wiederum aus zwei Gehäuseteilen, nämlich einem die Werbefläche 18 ausbildenden Deckelement 9a und einem mit diesem beispielsweise verschraubbaren, schalenförmigen Gehäuseelement 9b. Das Deckelement 9a und das Gehäuseelement 9b können miteinander verraste oder Gehäuseelement 9b verschraubt sein.

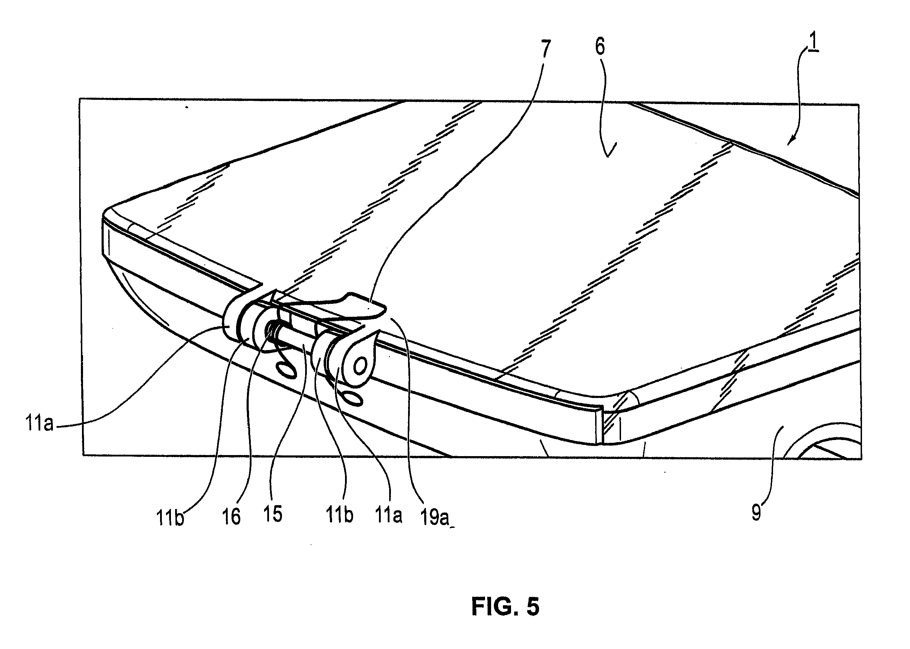

Fig. 5 zeigt in einer Ansicht auf das Scharnier oder Gelenk 11 die Ausführungsform der Halteklammer 7 mit U-förmig gebogenem Klemmschenkel 7a. Anstelle des vorzugsweise vollständig U-förmigen Klemmschenkel 7a, kann dieser auch einen langen und einen vergleichsweise kurzen Klemmschenkel aufweisen, der im Bereich der Fixierstelle 14 endet, während lediglich der andere U- bzw. Klemmschenkel die spiralförmige Federwindung 16 ausbildet, die von der Gelenkstange 15 durchsetzt ist.

Bei der geschlossenen Ausführungsform der Halteklammer 7 weisen beide U-Schenkel endseitig jeweils spiralfederartige Federabschnitte 16 aufweisen, die dann gemeinsam von der Gelenkwelle 15 durchsetzt sind. An Stelle der Gelenkstange 15 können auch lediglich Gelenkzapfen oder Zapfenfortsätze an den Gelenklaschen 11 b des Basiselements 9 vorgesehen und geeigneterweise auf einander zu ausgerichtet sein. Auch können die Gelenkzapfen die Laschen 11a des Deckels 10 nach außen überragen und dort die Spiralfederabschnitte 16 der Halteklammer 7 tragen.

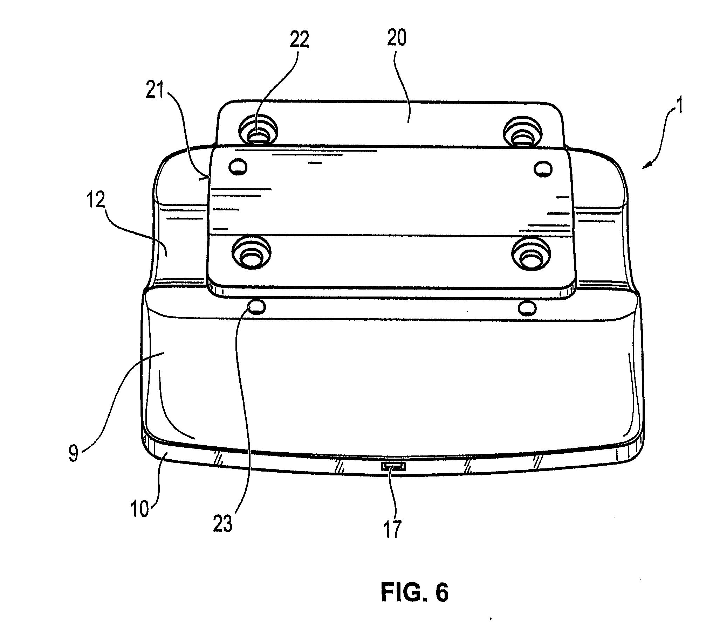

Fig. 6 zeigt die Montagevorrichtung 1 in einer perspektivischen Unteransicht mit Blick in die Rundnut 12. Zur lösbaren Befestigung der Montagevorrichtung 1 an der Griffstange 3 des Einkaufswagens 2 ist im Ausführungsbeispiel eine Halteplatte 20 vorgesehen, die ebenfalls eine Rundnut 21 aufweist, deren Radius wiederum geeigneterweise an den Außenumfang der Griffstange 3 angepasst ist. In diese Halteplatte 20 eingebrachte Schrauböffnungen 22 dienen zum Durchführen von vorzugsweise metrischen Halteschrauben, die im Zuge der Montage der Vorrichtung 1 an die Griffstange 3 des Einkaufswagens 2 in korrespondierende Innengewindeöffnungen 23 des Basiselements 9 und somit des Tragkörpers 5 eingeschraubt werden. Anstelle der einzelnen Halteplatte 20 können auch zwei oder mehrere laschenartige Halteelemente vorgesehen sein, die mit dem Basiselement 9 wiederum vorzugsweise verschraubbar sind.

### Bezugszeichenliste

- 1: Montagevorrichtung
- 2: Einkaufswagen
- 3: Griffstange
- 4: Wagengestell
- 5: Tragkörper
- 6: Auflagefläche
- 7: Halteklammer
- 8: Informations-/Werbeträger
- 9: Basiselement/Grundkörper
- 9a: Deckelement
- 9b: Gehäuseelement
- 10: transparenter Deckel
- 11: Gelenk/-verbindung
- 11a, 11b: Gelenköse/-lasche
- 12: Rundnut/-sicke
- 13: Kragen
- 14: Fixierstelle
- 15: Gelenkstange
- 16: Spiralfederabschnitt
- 17: Rast-/Schnappverbindung
- 17a: Rastnase
- 17b: Rastöffnung
- 18: Werbe-/Informationsfläche
- 20: Halteplatte
- 21: Rundnut
- 22: Schrauböffnung
- 23: Innengewindeöffnung

- L: Längsrichtung
- Q: Querrichtung

## Patentansprüche

1. Montagevorrichtung (1) für einen Einkaufswagen (2) mit einem eine Griffstange (3) aufweisenden Wagengestell (4), mit einem zur Montage an der Griffstange (6) vorgesehenen und eingerichteten Tragkörper (5),
- wobei der Tragkörper (5) eine Auflagefläche (6) und eine gegen diese vorgespannte Halteklammer (7) zur Klemmbefestigung eines Informationsträgers (8) aufweist,
- wobei der Tragkörper (5) ein die Auflagefläche (6) bereitstellendes Basiselement (9) mit daran gelenkig angebundenem Deckel (10) umfasst, und
- wobei der Tragkörper (5) ein Gelenk (11) mit mindestens einem Gelenkzapfen (11 a, 11 b) oder einer Gelenkstang (15) aufweist, welcher bzw. welche die Halteklammer (7) trägt.

2. Montagevorrichtung (1) nach Anspruch 1,
**dadurch gekennzeichnet,**
**dass** dem Tragkörper (5) ein mit diesem bodenseitig lösbar verbundenes, vorzugsweise verschraubbares, Halteelement (21) zur Befestigung an der Griffstange (6) zugeordnet ist.

3. Montagevorrichtung (1) nach Anspruch 1 oder 2,
**dadurch gekennzeichnet,**
**dass** das Basiselement (9) bodenseitig eine an den Außendurchmesser der Griffstange (3) angepasste Rundnut (12) aufweist.

4. Montagevorrichtung (1) nach einem der Ansprüche 1 bis 3,
**dadurch gekennzeichnet,**
**dass** das Basiselement (9) eine Werbe- und/oder Informationsfläche (18) aufweist.

5. Montagevorrichtung (1) nach Anspruch 4,
**dadurch gekennzeichnet,**
**dass** der Deckel (10) transparent ist und die Werbe- bzw. Informationsfläche (18) des Basiselements (9) überdeckt.

6. Montagevorrichtung (1) nach einem der Ansprüche 1 bis 5,
**dadurch gekennzeichnet,**
**dass** das Gelenk (11) sowohl zur schwenkbeweglichen Halterung des Deckels (10) als auch zur Aufnahme der Halteklammer (7) ausgebildet ist.

7. Montagevorrichtung (1) nach einem der Ansprüche 1 bis 6,
**dadurch gekennzeichnet,**
**dass** die Halteklammer (7) an den deckelseitigen Gelenkzapfen oder die deckelseitige Gelenköse (11a) und/oder an den Deckel (10) angeformt ist.

8. Montagevorrichtung (1) nach einem der Ansprüche 1 bis 7,
**dadurch gekennzeichnet,**
**dass** die Halteklammer (7) einen Klemmschenkel (19) aufweist, der sich in die Auflagefläche (6) des Tragkörpers (5) hinein erstreckt und dort unter Federvorspannung aufliegt.

9. Einkaufswagen (2) mit einer Montagevorrichtung (1) nach einem der Ansprüche 1 bis 8.
